# EUROPEAN PATENT APPLICATION

(11) **EP 1 118 366 A1**
(43) Date of publication of application: **25.07.2001**
(21) Application number: 00949894.0
(22) Date of filing: 26.07.2000
(51) Int. Cl.: A63F 13/12, A63F 13/06

(54) **METHOD AND SYSTEM FOR CONTROLLING GAME MACHINE THROUGH CELLULAR PHONE**

(30) Priority: 29.07.1999 JP 21475599
(71) Applicant: MATSUSHITA ELECTRIC INDUSTRIAL CO., LTD., Kadoma-shi, Osaka 571-8501 (JP)
(72) Inventor: TAKEDA, Hiroaki, Komatsu-shi, Ishikawa 923-0955 (JP); YAGI, Toshio, Miura-gun, Kanagawa 240-0111 (JP)
(74) Representative: Grünecker, Kinkeldey, Stockmair & Schwanhäusser Anwaltssozietät
(86) International application number: JP0004970
(87) International publication number: WO0108766

(57) **Abstract**

It is configured that a cellular telephone 103 comprise game operation keys for operation of an electronic game machine 101, and transmits remote operation signals generated according to operations by a player with the above operation keys; and the above electronic game machine 101 receives the above remote operation signals through a communication network 104, and operates a game function according to the above received remote operation signals. Thereby, a plurality of persons may operate one electronic game machine, even when there is only one electronic game machine controller, or when a plurality of persons is away from each other.

## Description

### Technical Field

The present invention relates to an operation system for remote control of an electronic game machine with cellular telephones in a mobile communication system, and an operation method for the same game machine.

### Background Art

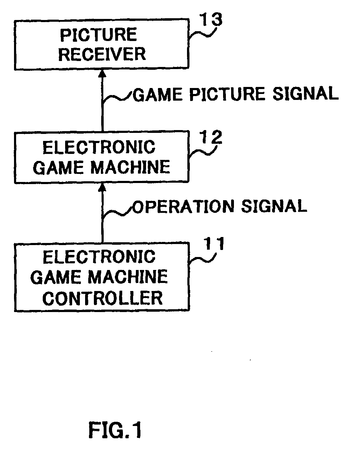

FIG. 1 shows a block diagram of a configuration of a conventional operation system for a game machine.

The operation system for a game machine shown in FIG. 1 comprises a game machine controller 11, a game machine 12, and a picture receiver 13.

The game machine controller 11 converts operation contents by a player into electric signals (operation signals) 14. The game machine 12 executes game software, and outputs game picture signals according to operation contents by a player. The picture receiver 13 displays game picture signals output from the game machine 12.

Then, an operation method of a game machine with the above configuration will be described. A player performs predetermined operations with operation keys of the game machine controller 11 for conversion of operation contents by the player to electric signals, and they are output to the game machine 12 as operation signals.

The game machine 12 performs predetermined arithmetic processing, based on the operation signals, form game picture signals for output to the picture receiver 13, where the above picture signals are displayed on a screen of a cathode-ray tube, a liquid crystal, and so on.

Here, many games have been recently operated by a plurality of players, and corresponding number of game machine controllers 11 to that of the players have been required in order to meet the above situations.

However, a conventional operation system for a game machine has had a problem that the number of players operating the game machine 12 is limited by that of the game machine controllers 11. Moreover, there has been a problem that a plurality of persons may not operate the game machine 12 at a sudden opportunity by remote controls, as the game machine controllers 11 are not always carried in our daily life.

### Disclosure of Invention

The object of the present invention is to provide an operation system for a game machine with cellular telephones, in which system a plurality of persons may operate one game machine, even when there is only one game machine controller, or when a plurality of persons are away from each other; and an operation method for the game machine.

The above object is realized by the following configuration: the cellular telephones is provided with game operation keys for operations of the game machine; remote operation signals, which are generated at the cellular telephones according to the operations of the game operation keys by the players, are transmitted; the above remote operation signals are received at the game machine; and game functions are executed according to the above received remote operation signals.

### Brief Description of drawings

FIG. 1 shows a block diagram of a configuration of a conventional operation system for a game machine;
FIG. 2 shows a block diagram of a configuration of an operation system for a game machine with a cellular telephone according to an embodiment 1 of the present invention;
FIG. 3 shows a block diagram of a configuration of a cellular telephone in the operation system for a game machine with the cellular telephone according to the embodiment 1 of the present invention;
FIG. 4 shows a block diagram of a configuration of a public network in the operation system for a game machine with a cellular telephone according to the embodiment 1 of the present invention;
FIG. 5 shows a block diagram of a configuration of a game machine in the operation system for the game machine with a cellular telephone according to the embodiment 1 of the present invention;
FIG. 6 shows a block diagram of a configuration of an operation system for a game machine with cellular telephone according to an embodiment 2 of the present invention;
FIG. 7 shows a block diagram of a configuration of an operation system for a game machine with cellular telephones according to an embodiment 3 of the present invention; and
FIG. 8 shows a block diagram of a configuration of an operation system for a game machine with cellular telephones according to an embodiment 4 of the present invention.

### Best Mode for Carrying Out the Invention

Hereinafter, embodiments of the present invention will be described, referring to drawings.

### (Embodiment 1)

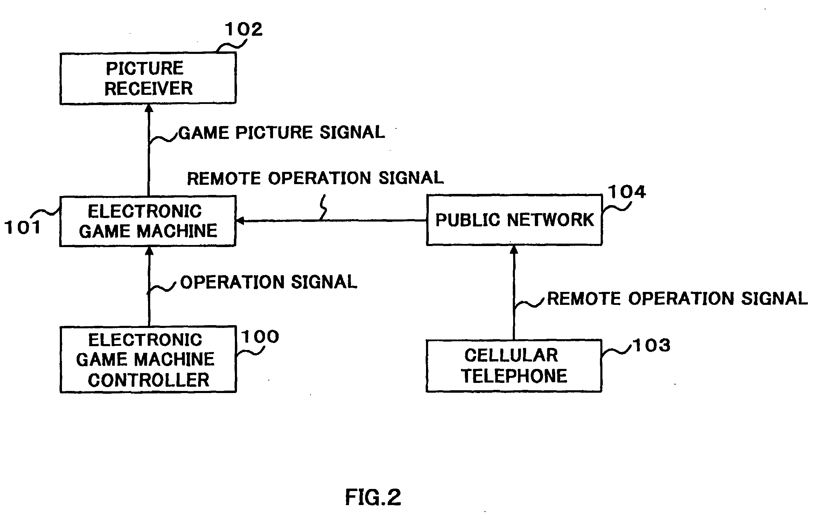

FIG. 2 shows a block diagram of a configuration of an operation system for a game machine with a cellular telephone according to the embodiment 1 of the present invention.

The operation system for a game machine with a cellular telephone shown in FIG. 2 mainly comprises: a game machine controller 100; a game machine 101; a picture receiver 102 with a cathode ray tube or a liquid crystal display, and so on; a cellular telephone 103; and a public network 104.

The game machine controller 100 converts operation contents by a player into operation signals of electric signals. The game machine 101 executes game software, and outputs game picture signals denoting the operation contents by the player. The picture receiver 102 displays the game picture signals output from the game machine 101.

The cellular telephone 103 converts the operation contents by the player into remote operation signals of electric signals for transmission to the public network 104, where the remote operation signals transmitted from the cellular telephone 103 are transmitted to the game machine 101.

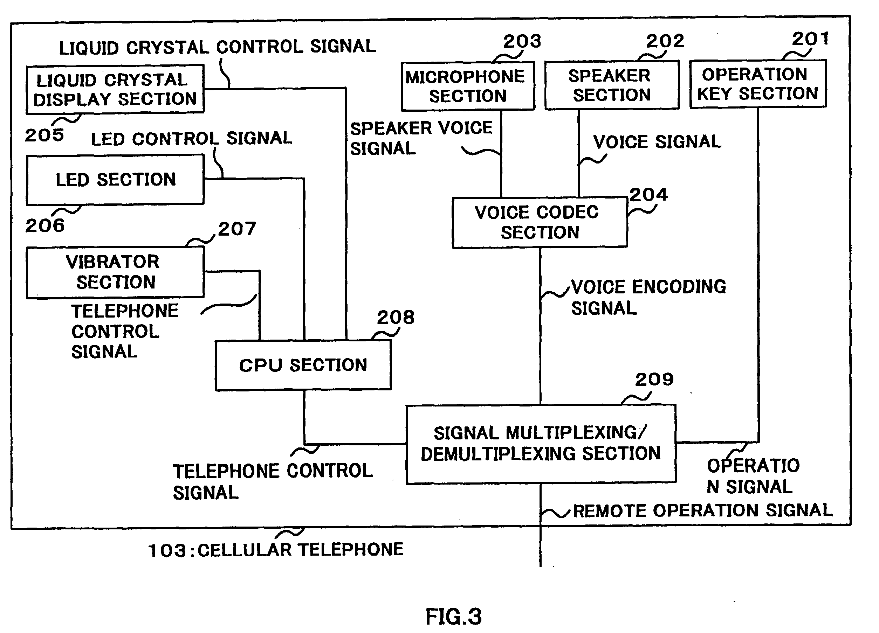

Now, details of a configuration of the cellular telephone 103 will be described, referring to FIG. 3.

As shown in FIG. 3, the cellular telephone 103 mainly comprises: an operation key section 201; a speaker section 202; a microphone section 203; a voice codec (coder-decoder) section 204; a liquid crystal display section 205; a LED (light emitting diode) section 206; a vibrator section 207; a CPU section 208; and a signal multiplexing/demultiplexing section 209.

The operation key section 201 is provided with game operation keys such as action keys and direction keys, which are provided on the game machine controller 100, for operation of the game machine 101, other than the keys which the cellular telephone 103 usually comprises; and the above section 201 converts the operation contents by the player into operation signals of electric signals.

The speaker section 202 reproduces voice signals of the communication end at voice communication. The microphone section 203 converts voices of a speaker into speaker voice signals of electric signals at voice communication. The voice codec section 204 compresses speaker voice signals at voice communication, and expands compressed voice signals of the communication end for output of the above voice signals to the speaker section 202.

The liquid crystal display section 205 displays the contents according to liquid crystal control signals generated by display control of the CPU section 208. Turning on/off of the LED section 206 is performed according to LED control signals generated by control for turning on/off of the CPU section 208. The vibrator section 207 vibrates according to telephone control signals generated by vibrating control of the CPU section 208. The CPU section 208 performs overall control of the cellular telephone 103 according to telephone control signals from the signal multiplexing/demultiplexing section 209.

The signal multiplexing/demultiplexing section 209 multiplexes signals transmitted from each function section of the cellular telephone 103 for transmission to the public network 104, and demultiplexes signals received from the public network 104 to those for each function section. Moreover, remote operation signals according to the operation signals are transmitted from the signal multiplexing/demutiplexing section 209 to the public network 104 at game operation. In such a case, the multiplexing/demutiplexing section 209 is configured not to transmit voice encoding signals. However, the operation signals and the voice encoding signals are multiplexed in the signal multiplexing/demutiplexing section 209 for transmission to the public network 104, when game contents require voice conversation, and when there are calling and so on in progress of games.

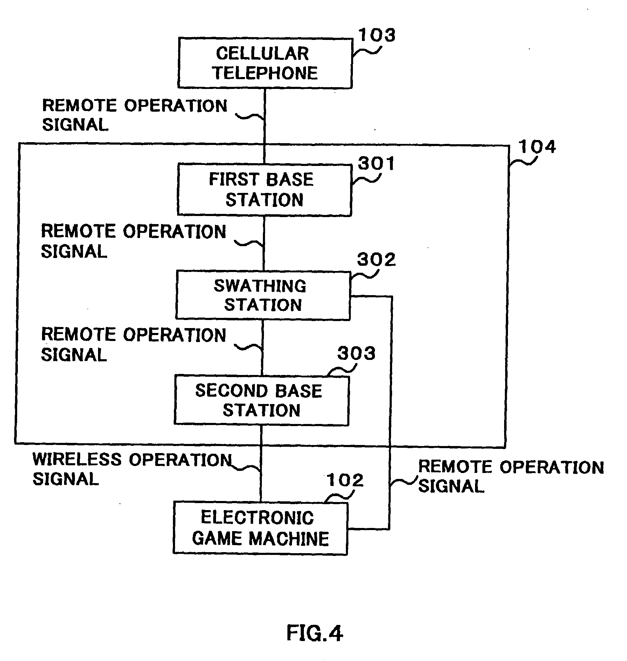

Then, details of a configuration of the public network 104 will be described, referring to FIG. 4.

As shown in FIG. 4, the public network 104 mainly comprises: a first base station 301; a switching station 302; and a second base station 303.

The first base station 301 communicates with the cellular telephone 103. The switching station 302 connects a channel between the first base station and the second base station, or the one between the first base station and the game machine 102 . The second base station 303 communicates with the game machine 101, when the above machine 101 is under mobile communication. However, the second base station 303 is not required, when the above machine 101 uses a fixed network.

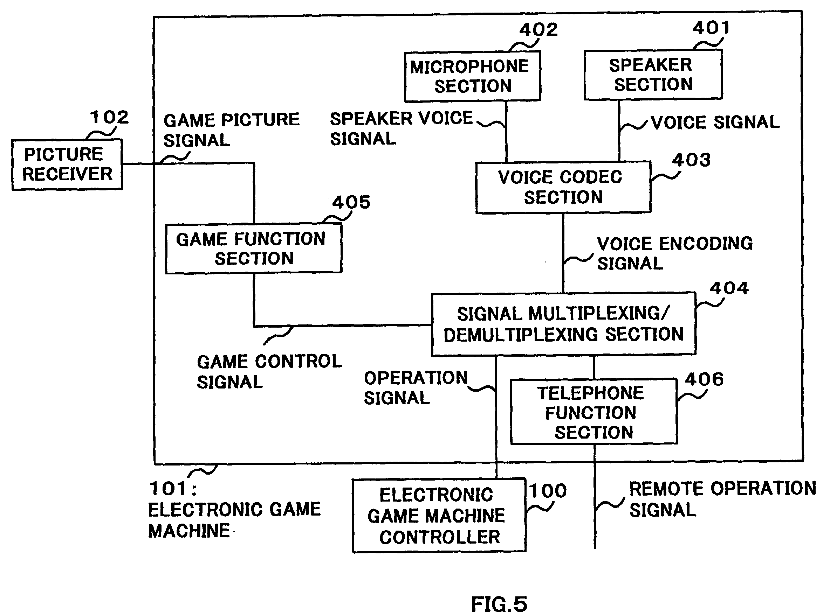

Then, details of a configuration of the game machine 101 will be described, referring to FIG. 5. As shown in FIG. 5, the game machine 101 mainly comprises: a speaker section 401; a microphone section 402; a voice codec section 403; a signal multiplexing/demultiplexing section 404; a game function section 405; and a telephone function section 406.

The speaker section 401 reproduces voice signals. The microphone section 402 converts voices into speaker voice signals of electric signals. The voice codec section 403 compresses the speaker voice signals, and expands compressed voice signals of the communication end for output of the above voice signals to the speaker section 401.

The signal multiplexing/demultiplexing section 404 forms game control signals by multiplexing of the operation signals of the game machine controller 100 and remote operation signals, and the above control signals are output to the game function section 405.

The game function section 405 performs processing required for progress of games. The telephone function section 406 performs channel connection between the game machine 101 and the public network 104 for either cellular telephone function or wire telephone function, or for both of them.

Here, when there is no need for voice communication during playing games, the speaker section 401, the microphone section 402, and the voice codec section 403 may be eliminated in the game machine 101.

Hereinafter, operations will be described, when the game machine 101 is operated in the operation system for a game machine with the above configuration, using the cellular telephone 103.

In the first place, the channel connection between the cellular telephone 103 and the game machine 101 is performed through the public network 104 by calling of the player with the above telephone 103. The above operation is performed by call connection between the telephone function section 406 of the game machine 101, and the above telephone 103.

The player performs desired operations for operation of the game machine 101 at the operation key section 201 of the cellular telephone 103, after completion of the above channel connection. The operation signals related with the above operations are transmitted to the public network 104 as remote operation signals through the signal multiplexing/demultiplexing section 209.

The above remote operation signals are received at the first base station 301 of the public network 104, and transmitted to the game machine 101 through the switching station 302. Here, when the telephone function section 406 of the game machine 101 is connected to the switching station 302 through wire channel, the remote operation signals are transmitted to the game machine 101 from the switching station 302 through wire channel. On the other hand, when the cellular telephone function of the telephone function section 406 is used, the remote operation signals are output from the switching station 302 to the second base station 303, from which the above operations signals are transmitted to the game machine 101 through wireless channel.

The game machine 101 receives the remote operation signals at the telephone function section 406; the received remote operation signals are demultiplexed at the signal multiplexing/demultiplexing section 404; and game control signals according to the above remote operation signals are output to the game function section 405.

The game function section 405 outputs game picture signals for change of the game contents displayed on the picture receiver 102 to the contents according to the operations of the player by arithmetic processing based on the above game control signals.

In the above case, the game machine 101 may include the contents of the operation signals from the game machine controller 100 in the above arithmetic processing, at the same time. Thereby, games may be operated, using both the game machine controller 100 and the cellular telephone 103.

As mentioned above, the game machine 101 may be operated with the cellular telephone 103 even without the game machine controller 100, as it is configured that the cellular telephone 103 has a function to operate the game machine 101, and the game machine 101 changes the game contents according to the operations with the above telephone after call connection between the above machine 101 and the cellular telephone 103 through the public network 104.

Moreover, a plurality of persons may operate one game machine, and improvements in the environments for operations of the game machine may be realized, as the game machine 101 may be also operated with the game machine controller 100.

### (Embodiment 2)

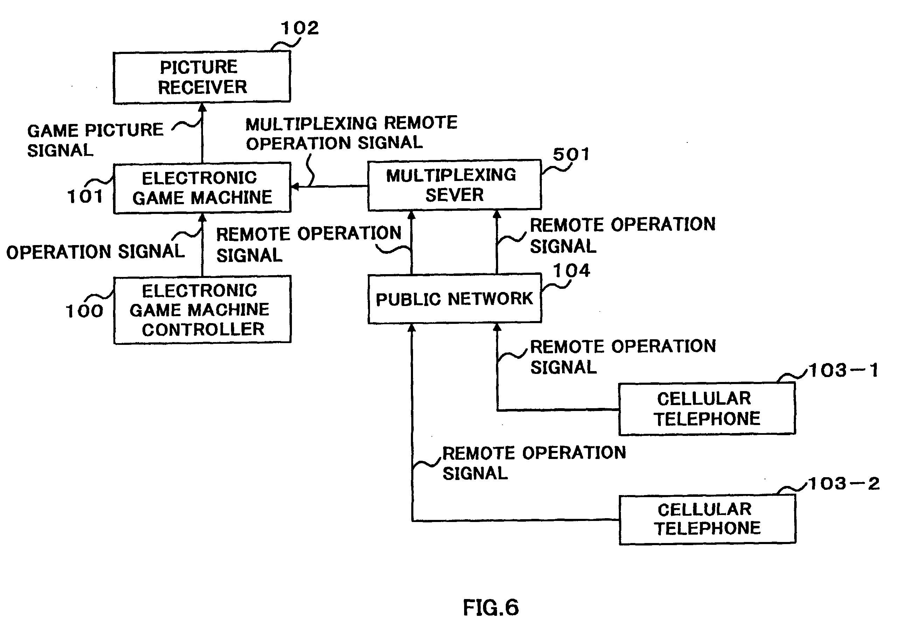

FIG. 6 shows a block diagram of a configuration of an operation system for a game machine with cellular telephones according to an embodiment 2 of the present invention. Here, sections similar to those previously described in FIG. 2 are denoted by the same reference numbers in the operation system for a game machine shown in FIG. 6, and the detailed description will be eliminated.

The operation system for a game machine, which uses cellular telephones, shown in FIG. 6 is configured to be operated with a plurality of cellular telephones 103-1, and 103-2 for simultaneous operation of the game machine 101, different from the configuration in FIG. 2.

That is, it is configured that a multiplexing server 501 is connected between the public network 104 and the game machine 101 for multiplexing of remote operation signals transmitted from the cellular telephones 103-1, and 103-2, and converted on the public network 104; and the above multiplexed remote operation signals are transmitted to the game machine 101.

The game machine 101 receives the remote operation signals in the telephone function section 406; the above received remote operation signals are demultiplexed in the signal multiplexing/demultiplexing section 404; and game control signals according to the above remote operation signals are output to the game function section 405.

The game function section 405 outputs game picture signals for change of the game contents displayed on the picture receiver 102 to the contents according to the operations of the player by arithmetic processing based on the game control signals.

In the above case, the game machine 101 may include the contents of the operation signals from the game machine controller 100 in the arithmetic processing, at the same time. Thereby, games may be operated, using both the game machine controller 100 and the cellular telephones 103.

As mentioned above, the game machine 101 may be operated simultaneously with a plurality of cellular telephones 103-1, and 103-2, as it is configured that the above telephones 103-1, and 103-2 have a function to operate the game machine 101; the remote operation signals transmitted from the above telephones are multiplexed in the multiplexing server 501; and the above machine 101 may be operated by the above multiplexed remote operation signals.

### (Embodiment 3)

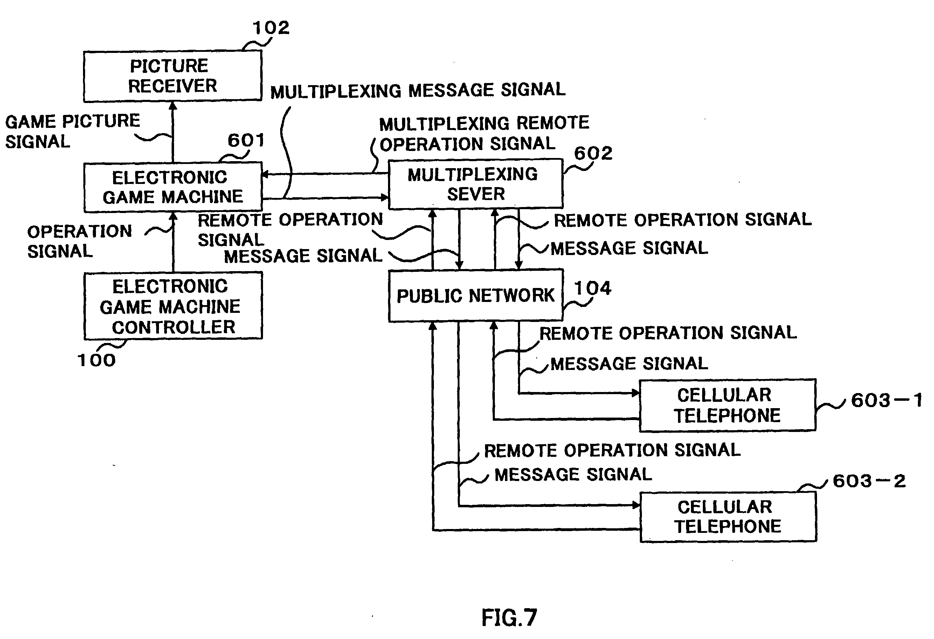

FIG. 7 shows a block diagram of a configuration of an operation system for a game machine with cellular telephones according to an embodiment 3 of the present invention. Here, sections similar to those previously described in FIG. 6 are denoted by the same reference numbers in the operation system for a game machine shown in FIG. 7, and the detailed description will be eliminated.

Functions of a game machine 601, a multiplexing server 602, and cellular telephones 603-1, and 603-2 in the operation system for a game machine, which uses cellular telephones, shown in FIG. 7 are configured to be different from those of FIG. 6.

The game machine 601 has a function, other than the functions provided in the game machine 101 described in the embodiment 1, by which the game function section 405 is configured to output messages for executing states of games where the games are executed according to operations with cellular telephones 603-1, and 603-2. Moreover, the signal multiplexing/demultiplexing section 404 has a function by which each message is multiplexed, and the multiplexed message signals are output to the multiplexing server 602 through the telephone function section 406.

The multiplexing server 602 has a function, other than the functions provided in the multiplexing server 501 described in the embodiment 2, by which the multiplexed message signals are output as divided massage signals for cellular telephones 603-1 and 603-2 to the public network 104.

Each message signal is converted on the public network 104 so as to be received at each cellular telephone 603-1, 603-2, and transmitted to the above telephones 603-1, 603-2.

Each cellular telephone 603-1, 603-2 has a function, other than the functions provided in the cellular telephone 103 described in the embodiment 1, by which the CPU section 208 displays the contents of characters and pictures according to the received message signals on the liquid crystal display section 205. Moreover, there is provided another function, other than the above functions, by which the LED section 206 is turned on, and the vibrator section 207 is vibrated according to the following information, when there is included information such as for turning-on of an LED, and for operation of a vibrator.

According to the above configuration, each message for executing states of each game which is being executed with the game machine 601 according to the operations using each cellular telephone 603-1, 603-2, is multiplexed, and the above multiplexed message signals are output to the multiplexing server 602.

In the multiplexing server 602, the multiplexed message signals are divided for each cellular telephone 603-1, 603-2, and each message signal is converted on the public network 104 so as to be received at each cellular telephone 603-1, 603-2, and transmitted to each cellular telephone 603-1, 603-2.

The contents of characters and pictures according to the message signals are displayed on the liquid crystal display section 205 of each cellular telephone 603-1, 603-2. Or, operations such as turning-on of the LED section 206, or vibration of the vibrator section 207 are performed.

As described above, it may be possible by transmitting various kinds of message signals to specific players not to leak information which is required to be in secrecy to other players during game operation, for example, information on pieces owned by each player in playing mah-jongg, when each player is operating one game machine 601 respectively with each cellular telephone 603-1, 603-2, which is owned by each player. Thereby, improvements in the game operations may be realized.

### (Embodiment 4)

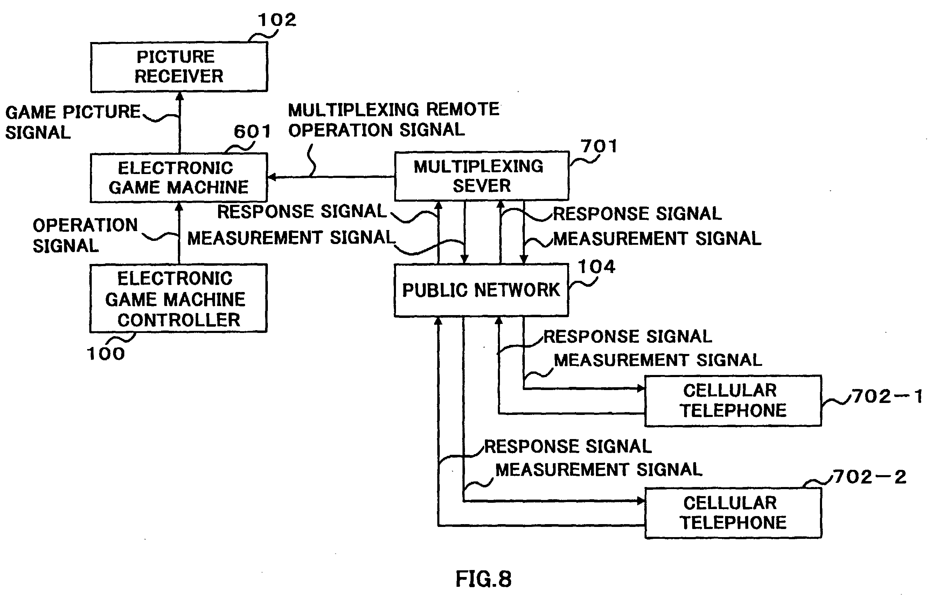

FIG. 8 shows a block diagram of a configuration of an operation system for a game machine with cellular telephones according to an embodiment 4 of the present invention. Here, sections similar to those previously described in FIG. 6 are denoted by the same reference numbers in the operation system for a game machine shown in FIG. 8, and the detailed description will be eliminated.

Functions of a multiplexing server 701, cellular telephones 702-1, and 702-2 in the operation system for a game machine, which uses cellular telephones, shown in FIG. 8 are configured to be different from those of FIG. 6.

The multiplex server 701 has a function, other than the functions provided in the multiplexing server 501 described in the embodiment 2, by which signal delays of sending and receiving signals, which pass through the public network 104, at each cellular telephone 702-1, 702-2 are detected, and the above delays are configured to be equalized.

Each cellular telephone 702-1, 702-2 has, other than the functions provided in the cellular telephones 103-1, and 103-2 described in the embodiment 2, a function to transmit response signals when measurement signals, which are transmitted by the multiplexing server 701 for measurement of the delays, and converted on the public network 104, are received.

In the above configuration, the measurement signals for measurement of the signal delays are transmitted from the multiplexing server 701 to the public network 104, where the above measurement ones are converted so as to be received at each cellular telephone 702-1, 702-2, and transmitted to each cellular telephone 702-1, 702-2. When the above measurement signals are received at each cellular telephone 702-1, 702-2, response signals are transmitted to the public network 104.

In the public network 104, the above response signals are converted so as to be received at the multiplexing server 701 for transmission to the above server 701.

In the multiplexing server 701, the time difference of the above received signals is measured on reception of each response signal. For example, it is assumed that the response signal transmitted from one cellular telephone 702-2 is received, when a period of T hours has passed after reception of a response signal transmitted from the other cellular telephone 702-1. The received time difference of T hours is stored in the multiplexing server 701.

Thereafter, the remote operation signal received from one cellular telephone 702-1 is stored in the multiplexing server 701, and the above stored information and the remote operation signal, which is received from the other cellular telephone 702-2 when T hours have passed after the above reception, are multiplexed for transmission to the game machine 101 as a multiplexing remote control signal.

Similarly, the function to eliminate the above delay difference may be also applied to the embodiment 3 shown in FIG. 7.

Thus, as the delays of the remote operation signals transmitted from each cellular telephone 702-1, 702-2 to the game machine 601 are configured to be equalized, there may be the same response time of the game machine 101 to operations by players of each cellular telephone 702-1, 702-2. Thereby, improvements in the game operation may be realized.

According to the present invention, a plurality of persons may operate one game machine even when there is only one game machine controller, as a game machine is configured to be operated with cellular telephones, as described above.

This application is based on Japanese Patent Application Hei 11 - 214755, filed July 29, 1999. The contents are incorporated herein by reference.

### Industrial Applicability

The present invention may be advantageously used when a plurality of persons play one game, using wireless channels.

## Claims

1. An operation system for an electronic game machine using cellular telephones, comprising:
an electronic game machine to operate a game function according to remote operation signals received through wireless or wire channels; and
a cellular telephone which comprises game operation keys, other than usual operation keys, to operate said electronic game machine; generates said remote operation signals according to the operations by a player with said game operation keys; and transmits said remote operation signals to said electronic game machine through a communication network.

2. An operation system for an electronic game machine using cellular telephones according to claim 1, wherein
said electronic game machine multiplexes operation signals generated by its own electronic game machine controller, and said remote operation signals; and operates a game function according to said multiplexed operation signals and remote operation signals.

3. An operation system for an electronic game machine using cellular telephones according to claim 1, wherein
said electronic game machine generates message signals to display operating states of a game function, and transmits them to cellular telephones through a communication network; and
said cellular telephones display contents of said received message signals on their own display.

4. An operation system for an electronic game machine using cellular telephones according to claim 1, comprising
a multiplexing server, which is connected between said electronic game machine and said communication network, to multiplex a plurality of remote operation signals received from a plurality of cellular telephones through said communication network for transmission to said electronic game machine, wherein
said electronic game machine operates a game function according to said multiplexed remote operation signals.

5. An operation system for an electronic game machine using cellular telephones according to claim 4, wherein
said multiplexing server transmits measurement signals to a plurality of said cellular telephones;
a plurality of said cellular telephones transmit response signals respectively to said multiplexing server on reception of said measurement signals; and
said multiplexing server obtains received time differences of said response signals transmitted from a plurality of said cellular telephones; stores the remote operation signal received first among remote operation signals from a plurality of said cellular telephones; multiplexes said stored remote operation signal and those received from other cellular telephones after said received time differences for transmission to the electronic game machine.

6. An operation system for an electronic game machine using cellular telephones according to claim 4, wherein
said electronic game machine generates each message signal denoting each operating state of said game function corresponding to respective remote operation signals of each of a plurality of said cellular telephones, multiplexes said generated massage signals for transmission to said multiplexing server;
said multiplexing server demultiplexes said multiplexed message signals for transmission to each of a plurality of said cellular telephones through said communication network; and
a plurality of said cellular telephones display contents of said demultiplexed message signals, which are addressed to themselves and received through said communication network, on their own display.

7. An operation system for an electronic game machine using cellular telephones according to claim 3, wherein
said electronic game machine inserts information for turning on/off of light emission, which denotes operating states of a game function, to said message signals; and
said cellular telephones turn on/off their own light-emitter according to said received message signals with said inserted information for turning on/off of light emission.

8. An operation system for an electronic game machine using cellular telephones according to claim 3, wherein
said electronic game machine inserts information for vibration, which denotes operating states of a game function, to said message signals; and
said cellular telephones vibrates their own vibrator according to said received message signals with said inserted information for vibration.

9. An operation system for an electronic game machine using cellular telephones according to claim 1, comprising
a function to multiplex remote operation signals and voice signals for transmission.

10. An operation method for an electronic game machine using cellular telephones, wherein it is configured that
said cellular telephones comprise game operation keys for operation of said electronic game machine, and transmit remote operation signals generated according to operations by a player with said operation keys; and
said electronic game machine receives said remote operation signals through a communication network, and operates a game function according to said received remote operation signals.
